# EUROPÄISCHE PATENTANMELDUNG

(11) **EP 1 162 104 A2**
(43) Veröffentlichungstag der Anmeldung: **12.12.2001**
(21) Anmeldenummer: 01113955.7
(22) Anmeldetag: 08.06.2001
(51) Int. Cl.: B60L 5/20

(54) **Schleifstück für Stromabnehmer**

(30) Priorität: 09.06.2000 DE 10028170
(71) Anmelder: Schunk Kohlenstofftechnik GmbH, D-35452 Heuchelheim (DE)
(72) Erfinder: Ströher, Frank, 35649 Bischoffen (DE); Schäfer, Jürgen, 35649 Bischoffen (DE); Banzhof, Uwe, 35644 Hohenahr (DE); Deckwerth, Martin, Dr., 65538 Grosskrotzenburg (DE); Wissler, Ulrich, Dr., 35578 Wetzlar (DE)
(74) Vertreter: Stoffregen, Hans-Herbert, Dr. Dipl.-Phys. Patentanwalt

(57) **Zusammenfassung**

Die Erfindung bezieht sich auf ein Schleifstück (10) für einen Stromabnehmer umfassend einen Träger (12) sowie mit dem Träger verbindbare Schleifleiste wie Kohleschleifleiste (18), wobei das Schleifstück auf einer Wippe des Stromabnehmers befestigbar ist. Um kostengünstig, materialsparend und zeitsparend die Schleifleiste austauschen zu können, wird vorgeschlagen, dass das Schleifstück (10) einen Hilftsträger (20) umfasst, dass die Schleifleiste (18) von dem Hilfsträger aufgenommen ist und dass aus dem Hilfsträger und der Schleifleiste bestehende Einheit lösbar mit dem Träger verbunden ist.

## Beschreibung

Die Erfindung bezieht sich auf Schleifstück für einen Stromabnehmer umfassend
- einen Träger,
- eine Schleifleiste wie Kohleschleifleiste sowie
- einen Hilfsträger,
wobei der Hilfsträger mit der Schleifleiste als Einheit lösbar mit dem Träger verbunden ist.

Bekannte im Einsatz befindliche Schleifstücke bestehen grundsätzlich aus einer aus Kohle-bzw. Graphitmischung, aus Kohle und Metall, insbesondere Kupfer bestehenden Kohleleiste, die auf einem aus Metall hergestellten selbsttragenden, insbesondere als Mehrkammerprofil ausgebildeten Träger mittels zum Beispiel Verkleben, Löten oder Klemmen befestigt wird. Dabei ist darauf zu achten, dass ein gut elektrisch leitender Kontakt zwischen Träger und Kohleleiste gegeben ist, um punktuelle hohe Stromdichten zu vermeiden, wodurch hohe Verluste auftreten und eine unerwünschte thermische Belastung der Kohleleiste selbst auftreten könnten. Der Träger wird sodann auf der Wippe des Stromabnehmers befestigt.

Im Falle eines Verschleißes oder eines Bruches der Schleifleiste ist es erforderlich, dass der Stromabnehmer umgehend außer Betrieb genommen wird. Hierzu ist es bekannt, sogenannte Bruchwächtereinrichtungen zu integrieren, die eine unzulässige Abnutzung oder einen Bruch der Schleifleiste detektieren, um sodann den Stromabnehmer automatisch abzusenken (s. zum Beispiel DE 38 17 743 C1).

Nach dem DE-GM 75 38 402 ist eine Schleifleiste klemmend von einem Träger aufgenommen, der zum Beispiel aus kupferplattiertem Aluminiumblech besteht.

Die DE 39 14 675 A1 bezieht sich auf ein Schleifstück für Stromabnehmer, bei der der Träger als Hohlkammerprofil ausgebildet ist. Eine entsprechende Konstruktion ergibt sich aus der DE 43 26 613 A1. Eine unterteilte Kohleschleifleiste für Stromabnehmer wird in der DE-C 535 757 beschrieben, wobei die einzelnen Schleifstücke über Klemmen mit einem Flachbügel verbunden sind.

Um erwähntermaßen einen guten elektrisch leitenden Kontakt zwischen der Schleifleiste und dem Träger sicherzustellen, erfolgt eine innige Verbindung derart, dass ein Lösen der Schleifleiste von dem Träger kaum möglich ist, so dass grundsätzlich Schleifleiste und Träger als Einheit von der Wippe gelöst und ausgetauscht werden, sofern die Schleifleiste verschlissen bzw. gebrochen sein sollte.

Eine Schleifleiste der eingangs genannten Art ist der DE 28 29 396 A1 zu entnehmen. Dabei geht von einem Kohlekörper eine metallische Schiene aus, die mit einem Träger verbindbar ist. Die Schiene ist mit dem Kohlekörper durch Löten oder Kleben elektrisch leitend verbunden. Die Schiene soll eine einfache Befestigung mit dem Träger ermöglichen. Hierzu werden die Längsränder der Schiene von umgebördelten Rändern des Trägers aufgenommen. Im Falle einer Beschädigung des Kohlekörpers muss der Träger selbst formändernd bearbeitet werden, um die Einheit aus Kohlekörper und metallischer Schiene zu entfernen.

Die DE-C 694 376 bezieht sich auf einen Kohleschleifbügel mit Metallunterlage, die durch Löten miteinander verbunden sind. Dabei wird die Metallunterlage formschlüssig von Abschnitten eines Trägers aufgenommen, so dass zum Entfernen der Einheit Schleifleiste/ Metallunterlage ein Bearbeiten des Trägers und eine damit verbundene Geometrieänderung erfolgen muss.

Der vorliegenden Erfindung liegt das Problem zu Grunde, ein Schleifstück der eingangs genannten Art so weiterzubilden, dass kostengünstig, materialsparend und zeitsparend die Schleifleiste ausgetauscht werden kann, wobei eine Wiederverwendung von Elementen möglich sein soll, ohne dass Einbußen in Bezug auf die elektrisch leitenden Kontakte zwischen Träger und Schleifleiste in Kauf genommen werden sollen. Insbesondere soll bei einer Zerstörung der Schleifleiste unmittelbar der Träger für eine neue Einheit Schleifleiste/ Hilfsträger verwendet werden können.

Erfindungsgemäß wird das Problem im Wesentlichen dadurch gelöst, dass die Schleifleiste mit dem Hilfsträger durch Klemmung verbunden ist und dass der Hilfsträger mit dem integral Auflaufhörner oder -bögen aufweisenden Träger mittels Schraubverbindung verbunden ist.

Durch die erfindungsgemäße Lehre sind die das Schleifstück bildenden Bauelemente Träger/Schleifleiste/Hilfsträger lösbar miteinander verbunden, wobei einerseits die Schleifleiste problemlos in den Hilfsträger durch Schieben einbringbar ist und andererseits die so gebildetete Einheit ohne Formveränderung des Trägers mit diesem verbindbar und somit auch von diesem lösbar ist.

Abweichend vom vorbekannten Stand der Technik wird auf der Wippe eines Stromabnehmers ein selbsttragender Auflaufhörner aufweisender Träger befestigt, mit dem lösbar und austauschbar der nicht selbsttragende Hilfsträger mit Schleifleiste verbunden ist. Im Falle einer Beschädigung bleibt der Träger mit der Wippe verbunden, da nur die Einheit Hilfsträger/Schleifleiste erneuert bzw. ausgetauscht werden muss. Dabei ist von besonderem Vorteil, dass der Träger integral Auflaufhörner aufweist, so dass im Störfall die Einheit Wippe/Träger unverändert bleibt.

Der Hilfsträger selbst weist vorzugsweise eine rinnenförmige Aufnahme für die in Längsrichtung des Hilfsträgers einschiebbare Schleifleiste auf. Bevorzugterweise ist der Hilfsträger ein C-profilartiges Element, dessen Querschenkel mit dem Träger verschraubt ist. Hierdurch ergibt sich eine großflächige Auflage und damit Verbindung zwischen dem Träger und dem Hilfsträger, wodurch der gut elektrisch leitende Kontakt sichergestellt ist. Dabei kann ferner der Träger in seiner hilfsträgerseitig verlaufenden Auflagefläche korrosionsgeschützt sein, wobei insbesondere die Auflagefläche für den Hilfsträger verkupfert ist.

Zur Vermeidung unerwünschter Übergangswiderstände zwischen Schleifleiste und dem nicht selbsttragenden Hilfsträger ist des Weiteren vorgesehen, dass die Schleifleiste trägerseitig verkupfert ist. Der Hilfsträger selbst kann aus Elektrolytkupfer bestehen oder dieses zumindest schleifleistenseitig und/oder trägerseitig aufweisen.

Der Träger ist eigensteif und kann ein Aluminiummehrkammerprofil, insbesondere Dreikammerprofil mit einem trapezförmigen Querschnitt sein, wobei flächig auf einer Grundseite des Trägers der Hilfsträger mit seinem Querschenkel aufliegt. Die Grundseite ist demnach die insbesondere korrisionsgeschützte Auflagefläche für den Hilftsträger.

Sofern in der aus dem Hilfsträger und der Schleifleiste bestehenden Einheit eine Schleifleistenüberwachung integriert ist, können alle bekannten Systeme zum Einsatz gelangen, also solche, die eine Überwachung mittels eines Messdrahtes, über Druckluft oder zum Beispiel über einen Lichtleiter vornehmen, wobei die Anschlüsse von dem Hilfsträger ausgehen bzw. diesen durchsetzen. Dabei ist insbesondere vorgesehen, dass in der Schleifleiste ein Überwachungskanal verläuft, der vorzugsweise von trägerseitige Bodenflächen ausgeht und mittig entlang der Längsachse der Schleifleiste verläuft.

Um eine einfache Lösbarkeit des Hilfsträgers vom Träger zu ermöglichen, wird vorgeschlagen, dass der Träger mit dem Hilfsträger über auf einer parallel zur Längsachse der Schleifleiste verlaufenden Geraden liegende Schraubelement wie Ankerschrauben verbunden ist. Dabei kann die Gerade versetzt zur Mittelachse der Schleifleiste verlaufen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: ein Schleifstück eines Stromabnehmers und
- Fig. 2: einen Schnitt entlang der Linie A-B in Fig. 1.

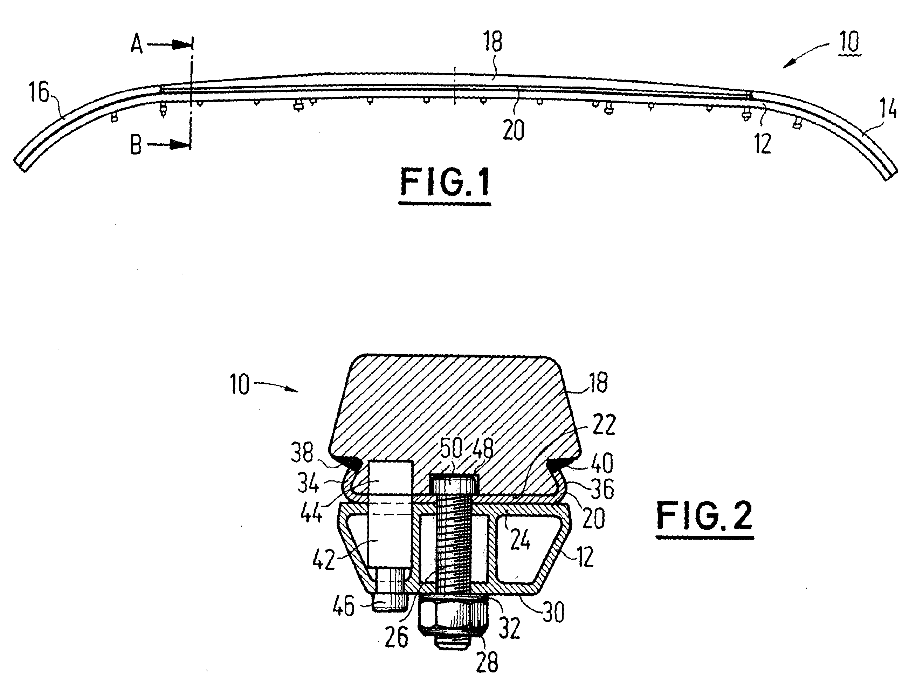

In Fig. 1 ist ein Schleifstück 10 eines Stromabnehmers. insbesondere für elektrische Schienenfahrzeuge bestimmt, dargestellt, das einen langgestreckten Träger 12 mit integrierten Auflaufhörnern oder -bögen 14, 16 sowie eine Schleifleiste 18 umfasst, die ihrerseits von einem Hilfsträger 20 ausgeht, der mit dem Träger 12 verbunden wie verschraubt bzw. verspannt ist. Der Träger 12 wiederum ist mit einer nicht dargestellten Wippe des Stromabnehmers verbunden.

Die Schleifleiste 18 besteht aus bekannten Materialien, also insbesondere aus Kohle- bzw. Graphitmischung oder aus Kohle und Metall wie insbesondere Kupfer. Ferner weist die Schleifleiste 18 übliche zusammen auf die Einsatzbereiche abgestellte Querschnitte auf. Insoweit wird jedoch auf den vorbekannten Stand der Technik verwiesen.

Abweichend von bekannten Kontaktleisten ist ein modularer Aufbau der mit der Wippe verbundenen Einheit Träger 12/Hilfsträger 20/Schleifleiste 18 vorgesehen, von der die Schleifleiste 18 mit dem nicht selbsttragenden Hilfsträger 20 als austauschbare Verschleißeinheit mit dem Träger 12 verbunden ist, der seinerseits grundsätzlich bleibend an bzw. auf der Wippe befestigt ist. Wird die Schleifleiste 18 beschädigt oder ist diese verschlissen, so ist es nur noch erforderlich, dass der Hilfsträger 20 mit der Schleifleiste 18 von dem Träger 12 gelöst wird, um sodann eine neue Einheit Schleifleiste/Hilfsträger zu befestigen. Somit ist es nicht mehr notwendig, dass bei einer Erneuerung einer Schleifleiste die gesamte mit der Wippe verbundene Schleifstückeinheit ausgetauscht werden muss, wie dies nach dem Stand der Technik der Fall ist. Auch ist eine Bearbeitung wie Formveränderung zum Einbauen bzw. Entfernen der Einheit Schleifleiste/Hilfsträger nicht erforderlich.

Wie die Schnittdarstellung der Fig. 2 verdeutlicht. weist der Hilfsträger 20 die Geometrie eine C-Profils auf. dessen Querschenkel 22 flächig auf einer Seite 24 des Trägers 12 aufliegt. Hierdurch ist ein guter elektrisch leitender Übersang gewährleistet. Die als Auflagefläche für den Hilfsträger 20 dienende Seite 24 ist korrosionsgeschützt wie z. B. verkupfert.

Der Hilfsträger 20 kann mit dem Träger 12 über Ankerschrauben 26 befestigt werden, die über Muttern 28 an gegenüberliegender Außenfläche 30 des Trägers 12 festgezogen werden. Zwischen Mutter 28 und der Fläche 30 des Trägers 12 kann eine Unterlegscheibe 32 angeordnet sein.

Abweichend von der zeichnerischen Darstellung können die Ankerschrauben 26 oder sonstige lösbare Befestigungsmittel außermittig verlaufen, so dass im Mittenbereich der Schleifleiste 18 ein Überwachungskanal in Längsrichtung der Schleifleiste 18 ausgebildet sein kann. Hierdurch ergibt sich eine höhere Stabilität der Schleifleiste 18.

Der Hilfsträger 20 weist erwähntermaßen eine C-profilartige Geometrie auf, zwischen deren Außenschenkeln 34, 36 die Schleifleiste 18 klemmend fixiert ist. Dabei ist die Schleifleiste 18 träger- bzw. fassungsseitig verkupfert. Der Hilfsträger 20 besteht vorzugsweise aus Elektrolytkupfer oder ist zumindest schleifleistenseitig und trägerseitig mit Elektrolykupfer beschichtet.

Der zwischen der Schleifleiste 18 und den freien Enden der Außenschenkel 34, 36 des Hilfsträgers 20 verlaufende Bereich 38, 40 ist mit Silikon abgedeckt. Somit ist sichergestellt, dass zwischen den Hilfsträger 20 und der Schleifleiste 18 Feuchtigkeit nicht eintreten kann, so dass der Fassungssitz korrosionsgeschützt ist.

Zur Montage ist es nur erforderlich, dass die Schleifleiste 18 in Längsrichtung des Hilfsträgers 20 hineingeschoben wird.

Des Weiteren besteht die Möglichkeit, die Schleifleiste 18 auf Bruch bzw. Verschleiß zu überwachen. Hierzu können bekannte Überwachungseinrichtungen zum Einsatz gelangen, wie Drucküberwachung, mittels elektrischem Leiter oder Lichtleiter. Im Ausführungsbeispiel ist eine Drucküberwachung vorgesehen. Hierzu wird der Träger 12 von einer Druckarmatur 42 durchsetzt, die in einem in Längsrichtung der Schleifleiste 18 mündenden Kanal 44 übergeht, der in der Zeichnung außermittig verläuft. Bevorzugterweise sollte der Kanal 44 mittig vorgesehen sein. um Einbußen in der Stabilität der Schleifleiste 18 zu vermeiden. Die Schraubbefestigungen verlaufen sodann außermittig. Außenseitig ist die Druckarmatur 42 mit einem Druckluftanschluss 46 versehen. Ferner weist die Schleifleiste 18 fassungsseitig einen Längskanal 48 auf, innerhalb dessen sich die Ankerschraube 26 mit ihrem Kopf 50 erstrecken kann. Der Längskanal 48 erstreckt sich entlang einer Geraden, die parallel zur Längsachse der Schleifleiste 18 verläuft.

Der eigensteife selbsttragende Träger 12 selbst ist vorzugsweise ein Dreikammerprofil und besteht aus Aluminium.

## Patentansprüche

1. Schleifstück für einen Stromabnehmer umfassend
- einen Träger (12),
- eine Schleifleiste (18) wie Kohleschleifleiste sowie
- einen Hilfsträger (20),
wobei der Hilfsträger mit der Schleifleiste als Einheit lösbar mit dem Träger verbunden ist,
**dadurch gekennzeichnet,**
**dass** die Schleifleiste (18) mit dem Hilfsträger (20) durch Klemmung verbunden ist und dass der Hilfsträger mit dem integral Auflaufhörner oder -bögen (14, 16) aufweisenden Träger (12) mittels Schraubverbindung verbunden ist.

2. Schleifstück nach Anspruch 1,
**dadurch gekennzeichnet,**
**dass** der Hilfsträger (20) nicht selbsttragend ausgebildet ist.

3. Schleifstück nach Anspruch 1 oder 2,
**dadurch gekennzeichnet,**
**dass** der Hilfsträger (20) eine rinnenförmige Aufnahme für die in Längsrichtung des Hilfsträgers einschiebbare Schleifleiste (18) aufweist, wobei der Hilfsträger (20) insbesondere ein C-profilartiges Element ist, dessen Querschenkel (22) mit dem Träger (12) flächig verbunden ist.

4. Schleifstück nach zumindest einem der vorhergehenden Ansprüche,
**dadurch gekennzeichnet,**
**dass** die Schleifleiste (18) trägerseitig verkupfert ist und/oder der Hilfsträger (20) aus Kupfer wie Elektrolytkupfer besteht oder zumindest schleifleistenseitig und/oder trägerseitig dieses aufweist.

5. Schleifstück nach zumindest einem der vorhergehenden Ansprüche.
**dadurch gekennzeichnet,**
**dass** die aus dem Hilfsträger (20) und der Schleifleiste (18) bestehende Einheit eine Schleifleistenüberwachungseinrichtung (42, 44, 46) aufweist, die von dem Träger (12) ausgeht oder den Träger durchsetzt, wobei eine Schleifleistenüberwachung zum Beispiel über einen Messdraht, über Druckluft oder über einen Lichtleiter erfolgt.

6. Schleifstück nach zumindest einem der vorhergehenden Ansprüche,
**dadurch gekennzeichnet,**
**dass** der Träger (12) eigensteif und ein Mehrkammerprofil, insbesondere ein Dreikammerprofil ist und vorzugsweise aus Aluminium besteht.

7. Schleifstück nach zumindest einem der vorhergehenden Ansprüche,
**dadurch gekennzeichnet,**
**dass** der Träger (12) mit dem Hilfsträger (20) über mehrere auf einer parallel zur Längsachse der Schleifleiste (18) verlaufenden Geraden liegende Schraubelement wie Ankerschrauben (26) verbunden ist, wobei die Gerade vorzugsweise versetzt zur Mittelachse der Schleifleiste (18) verläuft.

8. Schleifstück nach zumindest einem der vorhergehenden Ansprüche,
**dadurch gekennzeichnet,**
**dass** in der Schleifleiste (18) ein Überwachungskanal (44) verläuft, der vorzugsweise von trägerseitiger Bodenfläche ausgeht und in etwa mittig entlang der Längsachse der Schleifleiste verläuft.

9. Schleifstück nach zumindest einem der vorhergehenden Ansprüche.
**dadurch gekennzeichnet,**
**dass** der Träger (12) in seiner hilfsträgerseitig verlaufenden Auflagefläche korrosionsgeschützt ist, wobei insbesondere die Auflagefläche verkupfert ist.

10. Schleifstück nach zumindest einem der vorhergehenden Ansprüche,
**dadurch gekennzeichnet,**
**dass** zwischen Schleifleiste (18) und freiem Längsschenkel (34, 36) des Hilfsträgers (20) verlaufender Bereich gegenüber Feuchtigkeit insbesondere mittels Silikon abgedichtet ist.
